# EUROPEAN PATENT APPLICATION

(11) **EP 3 086 245 A1**
(43) Date of publication of application: **26.10.2016**
(21) Application number: 16166469.3
(22) Date of filing: 21.04.2016
(51) Int. Cl.: G06F 17/30

(54) **METHOD AND DEVICE FOR SHARING PICTURE**

(30) Priority: 21.04.2015 CN 201510191109
(71) Applicant: Xiaomi Inc., Beijing 100085 (CN)
(72) Inventor: CHEN, Zhijun, 100085 BEIJING (CN); ZHANG, Tao, 100085 BEIJING (CN); HOU, Wendi, 100085 BEIJING (CN)
(74) Representative: Delumeau, François Guy

(57) **Abstract**

The present invention relates to a method and a device for sharing a picture, which facilitates the user to consult pictures in the shared album. The method includes: detecting (S101) whether there is a picture needing to be synchronized to a shared album; when detecting a picture needing to be synchronized to the shared album, determining (S102) whether the picture contains a face that matches a predefined face needing to be shared specified in a first list, the first list defining one or more features of the predefined face; and if the picture contains a face that matches the predefined face, storing (S103) the picture in the shared album. The technical solutions of the present invention may realize a shared album in a unit of a person corresponding to a predefined face, which facilitates the user to consult pictures in the shared album.

## Description

### TECHNICAL FIELD

The present invention generally relates to the technical field of content sharing, and more particularly, to a method and a device for sharing a picture (for example over the Internet).

### BACKGROUND

With an increasing number of functions of a cloud server, the cloud server saves a large number of pictures for terminal users by using a cloud synchronization process. In the related art, when a user wants to share a picture with other persons via a cloud album, the user needs to determine the picture, and share the specific picture. When a terminal user newly captures some pictures via a terminal, the newly captured pictures may be uploaded to the cloud server via a real time synchronization process. However, since, using this process, the uploaded pictures are not classified as they are being stored, it is inconvenient for the user to look up the pictures in the cloud album.

### SUMMARY

In order to solve the problems existing in the related art, the embodiments of the present invention provide methods and devices for sharing pictures, so as to facilitate the user to consult pictures in the shared albums.

According to a first aspect of embodiments of the present invention, there is provided a method for sharing a picture, applied in a server, the method including:
detecting whether there is a picture needing to be synchronized to a shared album;
when detecting a picture needing to be synchronized to the shared album, determining whether the picture contains a face that matches with a predefined face needing to be shared specified in a first list, the first list defining one or more face features of the predefined face; and
if the picture contains a face that matches with the predefined face, storing the picture in the shared album.

In an embodiment, the detecting whether there is a picture needing to be synchronized to a shared album may include:
detecting whether a user identification corresponding to the picture needing to be synchronized to the shared album (e.g. the user identification of a person seeking to upload the picture) is stored in a second list, the second list being for recording a user identification of a user having permission to perform synchronization to the shared album;
if the user identification corresponding to the picture needing to be synchronized to the shared album is stored in the second list, determining there is a picture needing to be synchronized to the shared album; and
if the user identification corresponding to the picture needing to be synchronized to the shared album is not stored in the second list, prohibiting the picture needing to be synchronized to the shared album to synchronize to the shared album.

In an embodiment, the method may further include:
when detecting a user identification of a person accessing the shared album, determining whether the user identification is stored in a third list, the third list being for recording a user identification of a user having an access permission to the shared album; and
if the user identification accessing the shared album is stored in the third list, permitting a user corresponding to the user identification accessing the shared album to access the shared album.

In an embodiment, the method may further include:
identifying a face in each picture in a cloud album;
performing a face clustering process on the faces in the cloud album to obtain at least one face album, the face album including pictures including the same face; and
creating the shared album based on the face album.

According to a second aspect of embodiments of the present invention, there is provided a device for sharing a picture, applied in a server, including:
a detection module configured to detect whether there is a picture needing to be synchronized to a shared album;
a first determination module configured to, when the detection module detects a picture needing to be synchronized to the shared album, determine whether the picture contains a face that matches with a predefined face needing to be shared specified in a first list, the first list defining one or more face features of the predefined face; and
a storing module configured to, if the first determination module determines that the picture contains a face that matches with the predefined face, store the picture in the shared album.

In an embodiment, the detection module may include:
a detection submodule configured to detect whether a user identification corresponding to the picture needing to be synchronized to the shared album is stored in a second list, the second list being for recording a user identification of a user having permission to perform synchronization to the shared album;
a determination submodule configured to, if the detection submodule detects that the user identification corresponding to the picture needing to be synchronized to the shared album is stored in the second list, determine there is a picture needing to be synchronized to the shared album; and
a prohibiting submodule configured to, if the detection submodule detects that the user identification corresponding to the picture needing to be synchronized to the shared album is not stored in the second list, prohibit the picture needing to be synchronized to the shared album to synchronize to the shared album.

In an embodiment, the device may further include:
a second determination module configured to, when the detection module detects a user identification accessing the shared album, determine whether the user identification is stored in a third list, the third list being for recording a user identification of a user having an access permission to the shared album; and
an access module configured to, if the second determination module determines that the user identification accessing the shared album is stored in the third list, permit a user corresponding to the user identification accessing the shared album to access the shared album.

In an embodiment, the device may further include:
an identification module configured to identify a face in each picture in a cloud album;
a face clustering module configured to perform face clustering on the faces in the cloud album to obtain at least one face album, the face album including pictures including the same face; and
a creation module configured to create the shared album based on the face album obtained by the face clustering module.

According to a third aspect of embodiments of the present invention, there is provided a device for sharing a picture, including:
a processor; and
a memory for storing instructions executable by the processor;
wherein the processor is configured to:
detect whether there is a picture needing to be synchronized to a shared album;
when detecting a picture needing to be synchronized to the shared album, determine whether the picture contains a face that matches with a predefined face needing to be shared specified in a first list, the first list being for identifying the predefined face (e.g. based on a set of one or more face features of the predefined face); and
if the picture contains a face that matches with the predefined face, store the picture in the shared album.

The present invention also provides a computer program, which when executing on a processor of a server, performs the above method.

The technical solutions provided by embodiments of the present invention may have the following beneficial effects: when detecting a picture needing to be synchronized to the shared album, it is determined whether the picture contains a face that matches with a predefined face in a first list, and if the picture contains a face that matches with the predefined face, the picture is stored in the shared album. In this way, a shared album is obtained in a unit of a person corresponding to a predefined face, which facilitates the user to look up pictures in the shared album.

The determination that the picture contains a face that matches with the predefined face may be based on a comparison of face features of the face in the picture with a set of one or more face features of the predefined face, and the set of face features of the predefined face may be stored in the first list or may be acquired (e.g. from memory, over a network connection, and so on) based on data in the first list.

It is to be understood that both the foregoing general description and the following detailed description are illustrative and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for sharing a picture, according to an embodiment.
Fig. 2A is a flow chart of a method for sharing a picture, according to a first embodiment.
Fig. 2B is a schematic diagram of a scene applicable for the method for sharing a picture, according to an embodiment.
Fig. 3 is a flow chart of a method for sharing a picture, according to a second embodiment.
Fig. 4 is a flow chart of a method for sharing a picture, according to a third embodiment.
Fig. 5 is a block diagram of a device for sharing a picture, according to an embodiment.
Fig. 6 is a block diagram of another device for sharing a picture, according to an embodiment.
Fig. 7 is a block diagram applicable for a device for sharing a picture, according to an embodiment.

### DETAILED DESCRIPTION

Reference will now be made in detail - for the purposes of illustration and not limitation - to certain embodiments, examples of which are illustrated in the accompanying drawings. The following description refers to the accompanying drawings in which the same numbers in different drawings represent the same or similar elements unless otherwise represented. The implementations set forth in the following description of certain embodiments do not represent all implementations consistent with the invention. Instead, they are merely examples of apparatuses and methods consistent with aspects related to the invention as recited in the appended claims.

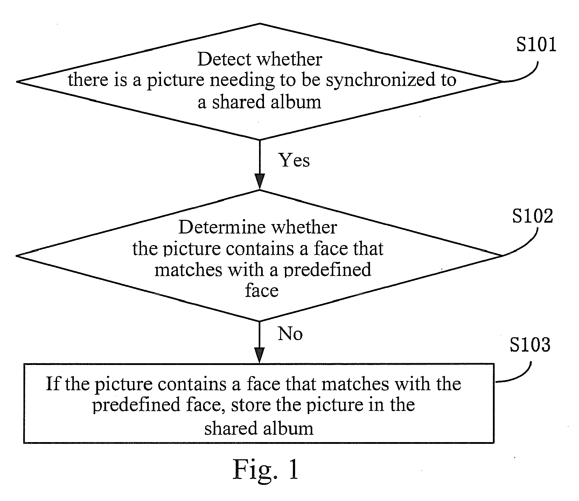

Fig. 1 is a flow chart of a method for sharing a picture, according to an embodiment of the invention. The method for sharing a picture may be applied in a server. As shown in Fig. 1, the method for sharing a picture includes the following steps S101-S103.

In step S101, whether there is a picture needing to be synchronized to a shared album is detected.

In an embodiment, the picture needing to be synchronized to a shared album may be from a smart terminal (such as a smart mobile phone, a tablet computer, and so on) corresponding to a user identification of the owner and/or creator of the shared album, or may be from a smart terminal corresponding to a user identification of a person having permission to perform cloud synchronization with the shared album. For example, the user identifications having permission to perform cloud synchronization with a shared album whose user identification is Bobby (also may be called user Bobby) may include Simon and Amy, then, when smart terminals respectively corresponding to Simon and Amy newly capture some pictures, the server may detect whether the pictures captured by the smart terminals respectively corresponding to Simon and Amy need to be synchronized to the shared album whose user identification is Bobby.

In step S102, when detecting a picture needing to be synchronized to the shared album, a determination is made whether a face in the picture matches with a predefined face specified in a first list, the first list being for recording a predefined face needing to be shared (e.g. by recording a set of one or more face features of the predefined face, by recording data indicating where the set of face features may be acquired, and so on).

In an embodiment, it is possible to identify a face in the picture needing to be synchronized to the shared album, then determine whether the face in the picture matches with a predefined face in the first list. The first list may contain user identification data to identify the person associated with the predefined face. In an embodiment, the number of user identifications, i.e. predefined faces, in the first list may be set by a user (e.g. owner) of the shared album according to pictures of persons needing to be shared. The first list may include one user identification/face, or may include more than one user identification/face. The present invention does not limit the specific number of faces/user identifications.

The present invention is not particularly limited having regard to the techniques that are used for detecting a face in a picture or for matching a face detected in a picture to a predefined face in the first list; any existing or new facial-detection, facial-recognition or face-matching technique may be employed (for example, but not limited to, techniques based on feature-extraction, skin texture analysis, template-matching, and so on).

In step 103, if the face in the picture matches the predefined face, the picture is stored in the shared album.

In an embodiment, for example, the user Simon sets a face of Bobby, who is relatively close to the user Simon, in the first list associated with a shared album, thereby when the user Simon captures a new picture via a smart terminal, it is possible to determine whether the new picture contains the face of Bobby and then make sure the picture containing the face of Bobby is stored in a shared album relating to Bobby. In this way, the picture is shared based on person, which facilitates the user Simon to consult pictures including relevant face in the shared album.

In the present embodiment, when detecting a picture needing to be synchronized to the shared album, whether a predefined face matched with a face in the picture exists in a first list is determined, and if the predefined face matched with the face in the picture exists, the picture is stored in the shared album. In this way, a shared album is obtained in a unit of a person corresponding to a predefined face (or in a unit of plural people corresponding to plural predefined faces), which facilitates the user to look up pictures from the shared album.

In an embodiment, the detecting whether there is a picture needing to be synchronized to a shared album may include:
detecting whether a user identification corresponding to the picture needing to be synchronized to the shared album (e.g. a user identification of the person seeking to upload the picture) is stored in a second list, the second list being for recording a user identification having a permission to perform synchronization with the shared album;
if the user identification corresponding to the picture needing to be synchronized to the shared album is stored in the second list, determining the picture needing to be synchronized to the shared album; and
if the user identification corresponding to the picture needing to be synchronized to the shared album is not stored in the second list, prohibiting the picture needing to be synchronized to the shared album to synchronize to the shared album.

In an embodiment, the method may further include:
when detecting a user identification of a person seeking to access the shared album, determining whether the user identification is stored in a third list, the third list being for recording a user identification having an access permission to the shared album; and
if the user identification seeking to access the shared album is stored in the third list, permitting a user corresponding to this user identification to access the shared album.

In an embodiment, the method may further include:
identifying a face in each picture in a cloud album;
performing face clustering on the faces in the cloud album to obtain at least one face album, the face album including pictures having the same face therein. The face clustering may be performed based on similarity between face features of the faces in the cloud album.

For details about how to realize the sharing of pictures, the follow-up embodiments may be referred to.

So far, the above methods provided by embodiments of the present invention may realize a shared album in a unit of person corresponding to a predefined face (or plural people corresponding to plural predefined faces), which facilitates the user to consult pictures in the shared album.

Hereinafter, the technical solutions provided by embodiments of the present invention will be described in specific embodiments.

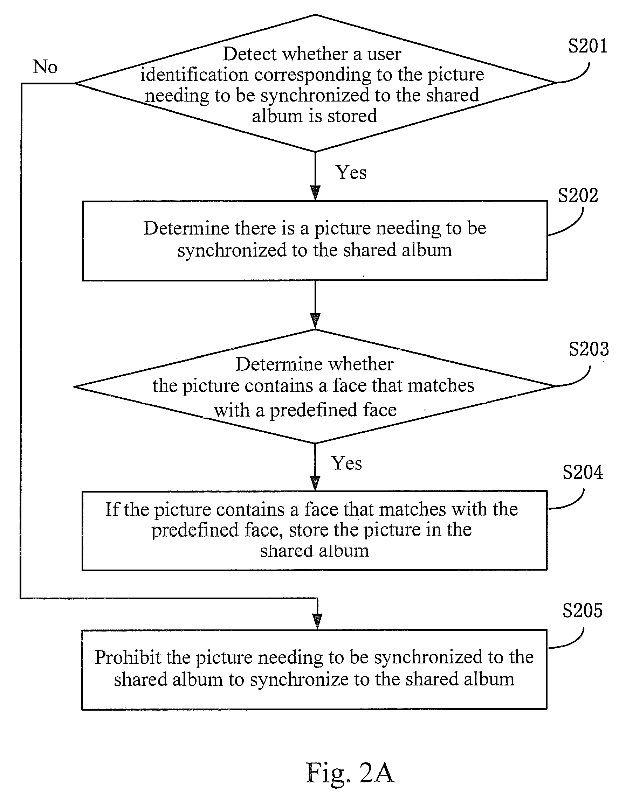

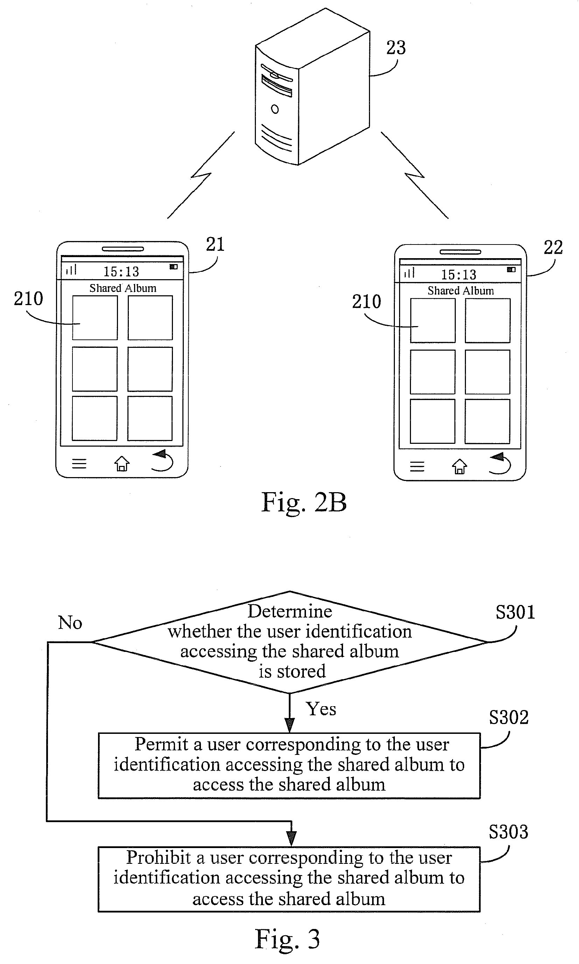

Fig. 2A is a flow chart of a method for sharing a picture, according to a first embodiment. Fig. 2B is a schematic diagram of a scene applicable for the method for sharing a picture, according to the embodiment. In the present embodiment, illustrative explanations are given by utilizing the above method provided by embodiments of the present invention, and adopting an example in which a second list is used to determine the user having permission to share pictures by synchronization to the shared album. The present embodiment is illustrated by referring to Fig. 2B, and as shown in Fig. 2A, the method includes the following steps.

In step S201, it is detected whether a user identification corresponding to the picture needing to be synchronized to the shared album is stored in a second list, the second list being for recording a user identification having a permission to synchronize to the shared album. If the user identification corresponding to the picture needing to be synchronized to the shared album is stored in the second list, step S202 is performed; and if the user identification corresponding to the picture needing to be synchronized to the shared album is not stored in the second list, step S205 is performed.

In an embodiment, the second list may be set by a user (e.g. the creator or owner) of the shared album according to the closeness of relationship of related persons, a degree of security or privacy of the shared album, and so on. For example, the user Simon may set his wife Amy to be allowed to synchronize pictures of their son Bobby to a shared album belonging to Simon. In an embodiment, the number of user identifications in the second list may be set by the user of the shared album according to a range within which the user wants to synchronize pictures. The second list may include one user identification, or may include more than one user identifications, the number not restricted by the present invention.

In step S202, if the user identification is stored in the second list, it is determined that there is the picture needing to be synchronized to the shared album.

For example, the second list corresponding to the shared album of the user Simon stores the user identification Amy. Then when Amy captures a new picture via a smart terminal, it may be determined that there is the picture needing to be synchronized to the shared album of Simon. Then the following steps are used to determine whether the picture newly captured by Amy should be synchronized to the shared album of Simon.

In step S203, when determining there is the picture needing to be synchronized to the shared album, it is determined whether the picture contains a face that matches to a predefined face in a first list, the first list being for recording a predefined face needing to be shared (the first list recording, for example, a set of one or more face features of the predefined face). And if the picture contains a face that matches to a predefined face in the first list, step S204 is performed.

The description of step S203 corresponds to the description above of step S102, so it is not necessary to elaborate again here.

In step S204, if the picture contains a face that matches to a predefined face in the first, the picture is stored in the shared album.

In step S205, if the user identification corresponding to the picture needing to be synchronized to the shared album is not stored in the second list, the picture needing to be synchronized to the shared album is prohibited to synchronize to the shared album.

Hereinafter, the illustrative explanations of the present invention are given in combination with Fig. 2B. As shown in Fig. 2B, the user Simon stores a large number of pictures in a smart terminal 21, and the pictures are synchronized to a shared album in a server 23 by using cloud synchronization. The pictures stored in the server 23 are identified according to the user identification of the person who uploaded the pictures to the server 23. In general, only the user Simon may access the pictures stored by himself in the server 23. When the user Simon creates a shared album 210 on the server 23, his pictures may be shared to other persons (such as a user Amy) via the shared album. In an embodiment, the user Simon may allow the user Amy to share the pictures captured by Amy via a smart terminal 22 to Simon's shared album, such that the pictures of a set person captured by Amy are timely uploaded to the shared album of Simon. Correspondingly, the user Simon may share the pictures captured by himself to his shared album, such that Amy is capable of timely access the pictures of the set person from the shared album of Simon.

For example, Simon and Amy are husband and wife, and have a son Bobby. Simon and Amy have a common concern for Bobby. When Amy captures a picture containing a face of Bobby via a smart terminal 22, the picture containing the face of Bobby may be synchronized to the shared album of Simon in the server 23 via the smart terminal 22 instantaneously, such that Simon may share this picture via the shared album instantaneously. For another example, when Simon captures a picture containing a face of Bobby, he may synchronize the picture containing the face of Bobby to the shared album of Simon in the server 23 via the smart terminal 21 instantaneously, such that Amy may share this picture instantaneously. In an embodiment, the shared album may not only be displayed on the smart terminal 21 of Simon, but also be displayed on the smart terminal 22 of Amy. In an embodiment, the picture containing the face of Bobby may be stored in a folder 210 in the shared album.

In the present embodiment, on the basis of the advantageous technical effects of the above embodiments, by detecting whether the second list stores the user identification corresponding to the picture needing to be synchronized to the shared album, and if the user identification corresponding to the picture needing to be synchronized to the shared album is stored in the second list, synchronizing the picture captured by that user to the shared album instantaneously, the user may share the picture instantaneously.

Fig. 3 is a flow chart of a method for sharing a picture, according to a second illustrative embodiment. In the present embodiment, illustrative explanations are given by utilizing the above method provided by embodiments of the present invention, and adopting an example in which a third list is used to determine the user identification having a permission of accessing the shared pictures. The present embodiment is illustrated in combination with Fig. 2B, and as shown in Fig. 3, the method includes the following steps.

In step 301, when detecting a user identification seeking to access the shared album, whether the user identification is stored in a third list is determined, the third list being for recording a user identification having an access permission to the shared album; and if the user identification seeking to access the shared album is stored in the third list, step S302 is performed; and if the user identification seeking to access the shared album is not stored in the third list, step S303 is performed. The number of user identifications in the third list may be set by the user of the shared album according to persons who are allowable to access the shared album. The third list may include one user identification, or may include more than one user identifications, the number is not restricted by the present invention. In an embodiment, the user identification contained in the third list may be the same as, or may be different from, the user identification contained in the second list mentioned in the above embodiment, which may be specifically set by the user (owner, creator) of the shared album.

In step S302, if the third list stores the user identification of the person attempting to access the shared album, this user is permitted to access the shared album.

In step S303, if the third list does not store the user identification seeking to access the shared album, a user corresponding to the user identification accessing the shared album is prohibited to access the shared album.

Hereinafter, the illustrative explanations are given in combination with Fig. 2B. As shown in Fig. 2B, when the server 23 detects that Amy seeks to access the shared album, the server 23 needs to determine whether the third list stores the user identification of Amy. If the third list stores the user identification of Amy, Amy is permitted to access the shared album of Simon. And if the third list does not store the user identification of Amy, Amy is prohibited to access the shared album.

In the present embodiment, on the basis of the advantageous technical effects of the above embodiments, by detecting whether the third list stores the user identification having access to the pictures in the shared album, and if the user identification having access to the pictures in the shared album is stored in the third list, allowing the user identification to access the shared album; and if the user identification having access to the pictures in the shared album is not stored in the third list, prohibiting the user identification to access the shared album, it is probable to protect the shared album from being attacked by illegal users, and ensure the pictures in the shared album to be safely stored in the server.

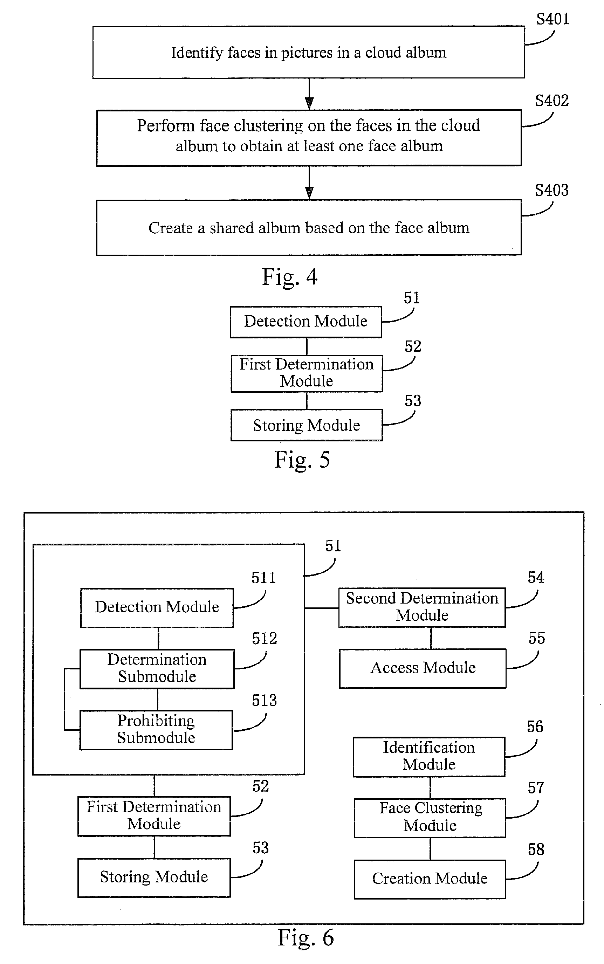

Fig. 4 is a flow chart of a yet another method of step S120, according to an embodiment. In the present embodiment, illustrative explanations are given by utilizing the above method provided by embodiments of the present invention, and adopting an example of how to store the pictures in the shared album in a unit of face. The present embodiment is illustrated in combination with Fig. 2B, and as shown in Fig. 4, the method includes the following steps.

In step S401, a face in each picture in a cloud album is identified.

In step S402, face clustering is performed on the faces in the cloud album to obtain at least one face album, the face album including pictures having the same face.

In step S403, a shared album is created based on the face album.

Hereinafter, the illustrative explanations are given in combination with Fig. 2B. As shown in Fig. 2B, the user Simon stores pictures in a cloud album in the server 23 via a smart terminal 21, identifies faces in all the pictures in the cloud album via a face identification method, determines facial features corresponding to each face, performs face clustering on the faces in the cloud album, e.g. based on face features, to obtain at least one picture group including pictures containing the same face. For example, by performing face identification on each picture in the shared album of Simon, faces of Amy, Bobby, Sunny, etc. are obtained, then by performing clustering of pictures respectively corresponding to Amy, Bobby and Sunny, at least one face album containing the faces of Amy, Bobby, Sunny, and etc. are obtained, such that a shared album may be created by the face album containing the faces of Amy, Bobby, and Sunny, for example, a shared album containing the face of Bobby is created, in this case, Amy may check all pictures about Bobby when accessing the shared album, so as to store pictures in the shared album in a unit of a face, and facilitate Simon and Amy to consult pictures of Bobby in the shared album.

In the present embodiment, by performing clustering of the pictures in the shared album by using face features, the shared album in a unit of person is achieved, and it is convenient for the user to consult pictures in the shared album.

Fig. 5 is a block diagram of a device for sharing a picture, according to an embodiment. As shown in Fig. 5, the device for sharing a picture includes a detection module 51, a first determination module 52, and a storing module 53.

The detection module 51 is configured to detect whether there is a picture needing to be synchronized to a shared album.

The first determination module 52 is configured to, when the detection module 51 detects a picture needing to be synchronized to the shared album, determine whether the picture contains a face matching a predefined face in a first list, the first list being for recording a predefined face needing to be shared (e.g. by recording a set of one or more face features of the predefined face).

The storing module 53 is configured to, if the first determination module 52 determines that the picture contains a face that matches with the predefined face, store the picture in the shared album.

Fig. 6 is a block diagram of another device for sharing a picture, according to an embodiment. On the basis of the above embodiment shown in Fig. 5, in an embodiment, as shown in Fig. 6, the detection module 51 may include a detection submodule 511, a determination submodule 512, and a prohibiting submodule 513.

The detection submodule 511 is configured to detect whether a user identification corresponding to the picture needing to be synchronized to the shared album is stored in a second list, the second list being for recording a user identification having permission to perform synchronization.

The determination submodule 512 is configured to, if the detection submodule 511 detects that the user identification corresponding to the picture needing to be synchronized to the shared album is stored in the second list, determine there is the picture needing to be synchronized to the shared album.

The prohibiting submodule 513 is configured to, if the detection submodule 511 detects that the user identification corresponding to the picture needing to be synchronized to the shared album is not stored in the second list, prohibit the picture needing to be synchronized to the shared album to synchronize to the shared album.

In an embodiment, the device may further include: a second determination module 54, and an access module 55.

The second determination module 54 is configured to, when the detection module 51 detects a user identification accessing the shared album, determine whether the user identification is stored in a third list, the third list being for recording a user identification having an access permission to the shared album.

The access module 55 is configured to, if second determination module 54 determines that the user identification accessing the shared album is stored in the third list, permit a user corresponding to the user identification accessing the shared album to access the shared album.

In an embodiment, the device may further include: an identification module 56, a face clustering module 57, and a creation module 58.

The identification module 56 is configured to identify faces in the pictures in a cloud album.

The face clustering module 57 is configured to perform face clustering on the faces in the cloud album identified by the identification module 56 to obtain at least one face album, the face album including pictures having the same face.

The creation module 58 is configured to create the shared album based on the face album obtained by the face clustering module 57.

With respect to the devices in the above embodiments, the specific manners for performing operations for individual modules therein have been described in detail in the embodiments regarding the methods, which will not be elaborated herein.

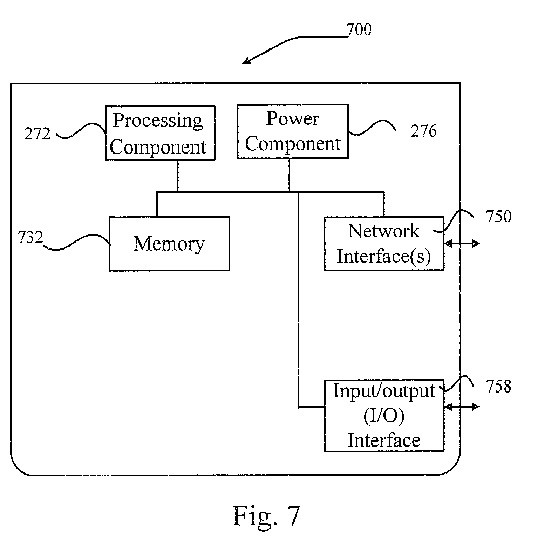

Fig. 7 is a block diagram applicable for a device for sharing a picture, according to an embodiment. For example, the device 700 may be provided as a smart mobile phone, or a tablet computer. Referring to Fig. 7, the device 700 includes a processing component 722 that further includes one or more processors, and memory resources represented by a memory 732 for storing instructions executable by the processing component 722, such as application programs. The application programs stored in the memory 732 may include one or more modules each corresponding to a set of instructions. Further, the processing component 722 is configured to execute the instructions to perform the following method for sharing a picture.

The device 700 may also include a power component 726 configured to perform power management of the device 700, wired or wireless network interface(s) 750 configured to connect the device 700 to a network, and an input/output (I/O) interface 758. The device 700 may operate based on an operating system stored in the memory 732, such as Windows ServerTM, Mac OS XTM, UnixTM, LinuxTM, FreeBSDTM, or the like.

## Claims

1. A method for sharing a picture, applied in a server, the method comprising:
detecting (S101) whether there is a picture needing to be synchronized to a shared album;
when a picture needing to be synchronized to the shared album is detected, determining (S102) whether the picture contains a face that matches with a predefined face needing to be shared specified in a first list, the first list defining one or more face features of the predefined face; and
if the picture contains a face that matches with the predefined face, storing (S103) the picture in the shared album.

2. The method of claim 1, wherein the detecting (S101) whether there is a picture needing to be synchronized to a shared album comprises:
detecting (S201) whether a user identification corresponding to the picture needing to be synchronized to the shared album is stored in a second list, the second list being for recording a user identification having permission to synchronize with the shared album;
if the user identification corresponding to the picture needing to be synchronized to the shared album is stored in the second list, determining (S202) that there is a picture needing to be synchronized to the shared album; and
if the user identification corresponding to the picture needing to be synchronized to the shared album is not stored in the second list, prohibiting (S205) the picture needing to be synchronized to the shared album to synchronize to the shared album.

3. The method of claim 1, further comprising:
when a user identification accessing the shared album is detected, determining (S301) whether the user identification is stored in a third list, the third list being for recording a user identification having an access permission to the shared album; and
if the user identification accessing the shared album is stored in the third list, permitting (S302) a user corresponding to the user identification accessing the shared album to access the shared album.

4. The method of claim 1, further comprising:
identifying (S401) faces in pictures in a cloud album;
performing (S402) face clustering on the faces in the cloud album to obtain at least one face album, the face album comprising pictures having the same face; and
creating (S403) the shared album based on the face album.

5. A device for sharing a picture, applied in a server, comprising:
a detection module (51) configured to detect whether there is a picture needing to be synchronized to a shared album;
a first determination module (52) configured to, when the detection module (51) detects a picture needing to be synchronized to the shared album, determine whether the picture contains a face that matches a predefined face needing to be shared specified in a first list, the first list defining one or more face features of the predefined face; and
a storing module (53) configured to, if the first determination module (52) determines that the picture contains a face that matches with the predefined face, store the picture in the shared album.

6. The device of claim 5, wherein the detection module (51) comprises:
a detection submodule (511) configured to detect whether a user identification corresponding to the picture needing to be synchronized to the shared album is stored in a second list, the second list being for recording a user identification having permission to perform synchronization;
a determination submodule (512) configured to, if the detection submodule (511) detects that the user identification corresponding to the picture needing to be synchronized to the shared album is stored in the second list, determine there is a picture needing to be synchronized to the shared album; and
a prohibiting submodule (513) configured to, if the detection submodule (511) detects that the user identification corresponding to the picture needing to be synchronized to the shared album is not stored in the second list, prohibit the picture needing to be synchronized to the shared album to synchronize to the shared album.

7. The device of claim 5, further comprising:
a second determination module (54) configured to, when the detection module (51) detects a user identification accessing the shared album, determine whether the user identification is stored in a third list, the third list being for recording a user identification having an access permission to the shared album; and
an access module (55) configured to, if the second determination module (54) determines that the user identification accessing the shared album is stored in the third list, permit a user corresponding to the user identification accessing the shared album to access the shared album.

8. The device of claim 5, further comprising:
an identification module (56) configured to identify faces in pictures in a cloud album;
a face clustering module (57) configured to perform face clustering on the faces in the cloud album to obtain at least one face album, the face album comprising pictures having the same face; and
a creation module (58) configured to create the shared album based on the face album obtained by the face clustering module (57).

9. A computer program, which when executing on a processor of a server, performs a method according to any one of claims 1 to 4.

10. A recording medium readable by a computer and having recorded thereon a computer program including instructions for executing the steps of a method for sharing a picture according to any one of claims 1 to 4.
